(19) Europäisches Patentamt
European Patent Office
Office européen des brevets

(11) **EP 2 539 674 B1**

(12) **EUROPÄISCHE PATENTSCHRIFT**

(45) Veröffentlichungstag und Bekanntmachung des Hinweises auf die Patenterteilung:
**12.10.2016  Patentblatt 2016/41**

(21) Anmeldenummer: **12716205.5**

(22) Anmeldetag: **16.03.2012**

(51) Int Cl.:
*G01K 1/20* (2006.01)        *G01K 7/36* (2006.01)
*G01K 13/08* (2006.01)

(86) Internationale Anmeldenummer:
**PCT/DE2012/200016**

(87) Internationale Veröffentlichungsnummer:
**WO 2012/152274 (15.11.2012 Gazette 2012/46)**

(54) **SENSOR, SYSTEM MIT EINEM SENSOR UND EINEM MESSOBJEKT SOWIE VERFAHREN ZUR TEMPERATURMESSUNG MITTELS SENSOR**

SENSOR, SYSTEM HAVING A SENSOR AND A MEASUREMENT OBJECT, AND METHOD FOR MEASURING TEMPERATURE USING A SENSOR

CAPTEUR, SYSTÈME COMPRENANT UN CAPTEUR ET UN OBJET À MESURER, AINSI QUE PROCÉDÉ DE MESURE DE TEMPÉRATURE AU MOYEN D'UN CAPTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.05.2011   DE 102011101224**
**19.08.2011   DE 102011110666**

(43) Veröffentlichungstag der Anmeldung:
**02.01.2013   Patentblatt 2013/01**

(73) Patentinhaber: **Micro-Epsilon Messtechnik GmbH & Co. KG**
**94496 Ortenburg (DE)**

(72) Erfinder:
• **NAGL, Josef**
**94550 Künzing (DE)**

• **HOENICKA, Reinhold**
**94496 Ortenburg (DE)**
• **MEDNIKOV, Felix**
**94496 Ortenburg (DE)**
• **GROEMMER, Werner**
**94496 Ortenburg (DE)**

(74) Vertreter: **Patent- und Rechtsanwälte Ullrich & Naumann**
**PartG mbB**
**Schneidmuehlstrasse 21**
**69115 Heidelberg (DE)**

(56) Entgegenhaltungen:
**DE-A1- 2 410 067     DE-A1- 4 024 432**

## Beschreibung

Die Erfindung betrifft einen berührungslos arbeitenden Wirbelstromsensor zur Temperaturmessung an einem elektrisch leitfähigen Messobjekt bzw. Bauteil, wobei die Messung im Einflussbereich von Messobjekt/Bauteil und Sensor unabhängig vom Abstand zwischen dem Sensor und dem Messobjekt/Bauteil ist, wobei die Eigentemperatur des Sensors, vorzugsweise am Ort der Messspule ermittelt wird.

Weiter betrifft die Erfindung ein Verfahren zur Temperaturmessung an einem Messobjekt bzw. Bauteil mittels eines berührungslos arbeitenden Wirbelstromsensors, wobei die Messung im Einflussbereich von Messobjekt/Bauteil und Sensor unabhängig vom Abstand zwischen dem Sensor und dem Messobjekt/Bauteil durchgeführt wird, mit einem erfindungsgemäßen Sensor.

Die Temperaturmessung mittels Wirbelstromverfahren ist aus der Praxis hinlänglich bekannt. Häufig wird diese kontaktlose Messmethode eingesetzt, wenn sich das Messobjekt bewegt, sei es weil es sich um ein drehendes Objekt handelt wie z.B. den Rotor oder die Welle eines Antriebes oder Motors, eine drehende Bremsscheibe oder ein Objekt, das sich am Sensor vorbeibewegt, wie z.B. eine Blechbahn im Walzprozess. Auch bei schwer zugänglichen Objekten kann eine kontaktlose Messung erforderlich sein, weil damit aus größerer Entfernung zum Objekt gemessen werden kann. Weiterhin ist eine kontaktlose Messung in besonders schwierigen Umgebungsverhältnissen wie z.B. bei hohen Temperaturen, oder wenn das Objekt Schock und/oder Vibrationen ausgesetzt ist, sinnvoll.

Die Temperaturmessung mittels Wirbelstrom ist lange bekannt. Da der Wirbelstromeffekt jedoch abstandsabhängig ist, muss entweder der Abstand des Sensors zum Messobjekt konstant gehalten werden, oder die Abstandsänderung muss kompensiert werden.

Aus der DE 24 10 067 A1 ist ein gattungsbildender berührungslos arbeitender Wirbelstromsensor bekannt. Genauer gesagt zeigt diese Druckschrift ein Spulensystem aus einer langen Primärspule und zwei kurzen Sekundärspulen in Differenzialschaltung bekannt. Es ist eine Auswertung des Phasenwinkels zwischen Erregersignal und Ausgangsignal vorgesehen. Der Sensor wird bewegt, bis der maximale Phasenwinkel erreicht ist. Die Messung ist abstandsunabhängig. Nachteile des bekannten Spulensystems liegen in der großen Bauform in axialer Richtung und in einer aufwändigen Einstellung zum Erreichen einer Abstandsunabhängigkeit.

Aus der DE 27 11 797 A1 ist ein Differenzverstärker mit einer Messspule, einer Blindspule, einem Oszillator, einem Phasenschieber und einem synchronen Empfangskreis bekannt. Durch Einstellung des Verstärkungsfaktors und der Phasenlage am Empfangskreis lässt sich eine abstandsabhängige Temperaturmessung vornehmen.

Aus der EP 0 423 084 B1 ist der Aufbau einer Impedanzbrücke mit einer Messspule und einer Kompensationsspule bekannt. Es erfolgt eine Messung von Betrag und Phase der Brückenspannung sowie eine Ermittlung von Eichkurven bezogen auf die Temperatur des Messobjekts und den Abstand zum Messobjekt. Die Ermittlung der Messobjekt-Temperatur erfolgt durch Vergleich der Messung mit den Eichkurven. Eine Kompensation der Sensortemperatur erfolgt anhand einer Kompensationsspule unter Berücksichtigung des Abstandes durch Eichkurven. Es ist nachteilig, dass die Ermittlung der Objekttemperatur durch einen Vergleich mit Eichkurven vorgenommen wird. Temperaturgradienten am Sensor werden nicht erfasst. Außerdem ist die Kompensation der Sensortemperatur nur in einem Arbeitspunkt möglich.

Der vorliegenden Erfindung liegt daher die Aufgabe zugrunde, einen berührungslos arbeitenden Wirbelstromsensor der gattungsbildenden Art derart auszugestalten und weiterzubilden, dass eine durch äußere Einflüsse weitestgehend unbeeinflusste Temperaturmessung an einem elektrisch leitfähigen Messobjekt bzw. Bauteil möglich ist. Der Sensor soll einen möglichst einfachen Aufbau haben. Ein entsprechendes Verfahren zur Nutzung eines solchen Sensors soll angegeben werden.

Die voranstehende Aufgabe ist durch die Merkmale der nebengeordneten Ansprüche 1 und 14 gelöst.

Danach ist der berührungslos arbeitende Wirbelstromsensor dadurch gekennzeichnet, dass der Einfluss der Eigentemperatur des Sensors bzw. eines Temperaturgradienten am Sensor auf das Ergebnis der Temperaturmessung am Messopjekt bzw. Bauteil kompensiert wird.

Das erfindungsgemäße Verfahren löst die voranstehende Aufgabe durch die Merkmale des nebengeordneten Anspruchs 14, nämlich dadurch, dass die Eigentemperatur des Sensors gemessen und deren Einfluss auf das Ergebnis der Temperaturmessung kompensiert wird.

Erfindungsgemäß liegt hier folgende Überlegung/Erkenntnis zugrunde:

Bei der Temperaturmessung ist die gewünschte Messgröße die Temperatur des Messobjektes. Da jedoch auch der Sensor selbst einem Temperatureinfluss ausgesetzt ist, der das Messergebnis verfälschen könnte, ist es notwendig, die Temperaturmessung unabhängig von der Sensortemperatur selbst zu bestimmen. Dies ist im Stand der Technik bisher nicht oder nur in einem Arbeitspunkt berücksichtigt.

Zum Messverfahren sei zunächst Grundsätzliches wie folgt ausgeführt:

Sensoren zur berührungslosen Bestimmung der Temperatur eines Messobjektes arbeiten beispielsweise nach dem Wirbelstromprinzip. Dabei wird eine Spule mit Wechselstrom oder -spannung gespeist. Die Spule befindet sich im Einflussbereich eines elektrisch leitfähigen Messobjektes, dessen Temperatur bestimmt werden soll. Durch das elektromagnetische Wechselfeld werden im Messobjekt Wirbelströme induziert. Diese sind abhängig von der Frequenz des Wechselfeldes, dem Abstand zwischen Spule und Messobjekt sowie der Leitfähigkeit und Permeabilität des Messobjektes.

Ausgehend vom Faradayschen Induktionsgesetz

$$\text{rot } \vec{E}(t) = -\frac{\partial}{\partial t} \vec{B}(t)$$

erzeugt ein zeitlich veränderliches Magnetfeld in einem Leiter nach dem ohmschen Gesetz

$$\vec{j}(t) = \sigma \cdot \vec{E}(t)$$

und mit der magnetischen Induktion

$$\vec{B}(t) = \mu \cdot \vec{H}(t)$$

im Leiter elektrische Wirbelströme $\vec{j}(t)$, die der Beziehung

$$\text{rot } \vec{j}(t) = -\sigma \cdot \mu \cdot \frac{\partial}{\partial t} \vec{H}(t) \qquad \text{(Gleichung 1)}$$

folgen.

Die Wirbelströme erzeugen ein elektromagnetisches Feld, das auf die Erregerspule zurückwirkt und deren Impedanz beeinflusst.

Der spezifische Widerstand eines metallischen Leiters ist temperaturabhängig nach der bekannten Formel

$$r(T) = r_0 \cdot (1 + \alpha \cdot (T - T_0) + \beta \cdot (T - T_0)^2) \qquad \text{(Gleichung 2)}$$

Mit dem linearen Temperaturkoeffizienten $\alpha$ und dem quadratischen Temperaturkoeffizienten $\beta$.

Nach einer einfachen Umformung für die Leitfähigkeit

$$\sigma(T) = \frac{1}{r(T)}$$

erhält man folgenden Ausdruck für die Temperaturabhängigkeit der Leitfähigkeit:

$$\sigma_T = \frac{\sigma_0}{1 + \alpha \cdot (T - T_0) + \beta \cdot (T - T_0)^2} \qquad \text{(Gleichung 3)}$$

Dabei ist

$\sigma_T$ = Leitfähigkeit bei der Temperatur $T$
$\sigma_0$ = Leitfähigkeit bei der Temperatur $T_0$
$\alpha$ = Linearer Temperaturkoeffizient
$\beta$ = Quadratischer Temperaturkoeffizient

Löst man Gleichung 3 nach der Temperatur auf, so erhält man:

$$T = \frac{-\alpha + \sqrt{\alpha^2 - 4\beta * \left(1 - \frac{\sigma_0}{\sigma_t}\right)}}{2*\beta} + T_0 \qquad \text{(Gleichung 4)}$$

eine Beziehung zwischen der Temperatur $T$ und der Leitfähigkeit $\sigma$.

Häufig genügt es, lediglich den linearen Temperaturkoeffizienten zu betrachten, dann vereinfacht sich Gleichung 3 zu

$$\sigma_T = \frac{\sigma_0}{1 + \alpha * (T - T_0)} \quad , \qquad \text{(Gleichung 5)}$$

woraus für die Temperatur $T$ folgt:

$$T = \frac{1}{\alpha} * \left(\frac{\sigma_0}{\sigma_T} - 1\right) + T_0 \qquad \text{(Gleichung 6)}$$

Bei höheren Temperaturen ab ca. 80°C oder bei höheren Genauigkeitsanforderungen genügt die lineare Approximation nicht mehr, dann muss der quadratische Temperaturkoeffizient mit zur Berechnung herangezogen, d.h. Gleichung 4 verwendet werden.

Die Bestimmung der Leitfähigkeit $\sigma$ erfolgt durch eine Impedanzmessung der Spule. Die (komplexe) Impedanz $\underline{Z}$ der Spule hängt nach Gleichung 1 bei Anwesendheit eines Messobjektes im Abstand $d$ von der Spule auch von den Materialparametern $\sigma$ und $\mu$ des Messobjektes ab. Die Impedanz ist also eine Funktion der Variablen

$$\underline{Z} = \underline{Z}(\sigma_T, \mu, d, r, T_S, \omega, ...) \quad , \text{ wobei}$$

$\sigma_T$ = Leitfähigkeit bei der Temperatur $T$
$d$ = Abstand der Spule zum Messobjekt
$T_S$ = Eigentemperatur der Spule
$\mu$ = Permeabilität des Messobjektes
$\omega$ = Frequenz des Wechselfeldes
$r$ = mittlerer Radius der Spule.

Die Impedanz ist also eine Funktion der Materialparameter ($\sigma$, $\mu$) und Parametern der Spule (beispielsweise mittlerer Radius $r$, Eigentemperatur $T_S$) bzw. der Erregerfrequenz ($\omega$) sowie deren Abstand d zum Messobjekt. Durch geeignete mathematische Methoden kann diese Funktion weiter vereinfacht oder durch numerische Methoden dahingehend berechnet werden, dass die Materialparameter bestimmbar sind. Somit ist durch eine Impedanzmessung der Spule eine Bestimmung der Leitfähigkeit und damit der Temperatur des Messobjektes möglich.

Beispielsweise kann mit einem mathematischen Modell die Impedanz der Spule aufgeteilt werden in einen Anteil $\underline{Z}_0$ und einen Anteil $\underline{Z}_C$, wobei $\underline{Z}_0$ nur von der Spule ohne Einfluss des Messobjektes abhängt und $\underline{Z}_C$ die Kopplungsimpedanz zwischen Spule und Messobjekt darstellt:

$$\underline{Z} = \underline{Z}_0 + \underline{Z}_C$$

Für den Fall nicht-ferromagnetischer Messobjekte, d.h. $\mu = \mu_0$, erhält man eine Messvorschrift für die Leitfähigkeit, die unabhängig vom Abstand ist:

$$\sigma_T = \frac{9 * \tan^2 \varphi_c}{2 * \mu_0 * \omega * r^2} \qquad \text{(Gleichung 7)}$$

Dabei ist

$$\tan \varphi_C = \frac{\text{Im}\{\underline{Z}_C\}}{\text{Re}\{\underline{Z}_C\}}$$

der Phasenwinkel zwischen Realteil und Imaginärteil der Kopplungsimpedanz $Z_C$.
$\omega =$ die Frequenz des Wechselfeldes
$r =$ der mittlere Radius der Spule
Setzt man Gleichung 7 in Gleichung 6 ein, ergibt sich für die Temperatur:

$$T = \frac{1}{\alpha} \cdot \left( \frac{\sigma_0}{k \cdot \tan^2 \varphi} \cdot \omega \cdot r^2 - 1 \right) + T_0 \qquad \text{(Gleichung 8)}$$

wobei

$$k = \frac{9}{2 * \mu_0}$$

In analoger Weise kann Gleichung 7 auch in Gleichung 4 eingesetzt werden, was einen Ausdruck für die Temperatur $T$ ergibt, der auch vom quadratischen Temperaturkoeffizienten abhängt:

$$T = \sqrt{\frac{1}{\beta} \cdot \left( \frac{\sigma_0}{k \cdot \tan^2 \varphi} \cdot \omega \cdot r^2 - 1 \right) + \kappa^2} - \kappa + T_0 \qquad \text{(Gleichung 9)}$$

mit

$$\kappa = \frac{\alpha}{2\beta}$$

Für die Bestimmung der Temperatur ist mit diesem Modell lediglich eine Messung von $\tan \varphi_C$ erforderlich, nämlich den Real- und Imaginärteil der Impedanz der Spule zu messen.
Als Messobjekt können grundsätzlich alle leitfähigen Objekte verwendet werden. Idealerweise besitzen diese im zu erfassenden Temperaturbereich einen linearen Zusammenhang nach Gleichung 5 zwischen Leitfähigkeit und Temperatur. Um einen in einem möglichst weiten Bereich linearen Zusammenhang zwischen Temperatur und Leitfähigkeit zu erhalten, der gerade bei hohen Temperaturänderungen notwendig ist, könnten für das Messobjekt besonders geeignete Materialien verwendet werden. Ebenso ist es für Messungen in großem Temperaturbereich erforderlich, dass eine hohe relative Änderung der Leitfähigkeit über die Temperatur erreicht wird. Es könnten Metalle wie Titan, Wolfram oder Molybdän für Messobjekte verwendet werden, die eine große relative Änderung der Leitfähigkeit mit der Temperatur aufweisen. Aber auch andere Metalle mit geeigneten Eigenschaften kommen in Frage, um für die jeweilige Anwendung optimale Ergebnisse zu erzielen.
Die Impedanz der Spule kann mit bekannten Methoden gemessen werden. Sie kann beispielsweise durch Auswertung von Real- und Imaginärteil (bzw. Betrag und Phase) einer wechselstromgespeisten Messspule bei einer festen Frequenz gemessen werden. Daraus kann auf die Materialparameter des Messobjekts geschlossen werden. Da der Zusammenhang zwischen der Leitfähigkeit und der Temperatur des Messobjektes bekannt ist, kann insbesondere mit der elektrischen Leitfähigkeit auf die Temperatur des Messobjektes geschlossen werden. Um die Anzahl der temperaturabhängigen Parameter des Messobjektes zu reduzieren, wird in einer bevorzugten Ausführung des Sensors das Material des Messobjektes so gewählt, dass die Permeabilität konstant über den Temperaturverlauf (z.B. nicht ferromagnetische Metalle, CFK, Halbleitermaterialien, Flüssigkeiten...) ist. Mit geeigneten Algorithmen ist diese Messung in definierten Bereichen vom Abstand unabhängig. Diese Abstandsunabhängigkeit ist vor allem bei großen zu messenden Temperaturspannen und bei rotierenden Objekten wichtig, da es durch Temperaturausdehnung der Materialien oder durch Unwucht der rotierenden Objekte häufig zur Variation des Abstandes Messobjekt - Sensor kommt.

Sofern die Permeabilität des Messobjektes nicht konstant über die Temperatur ist, oder zur Erhöhung der Genauigkeit, kann die Erfassung der Materialparameter bei mehreren Frequenzen erfolgen. Hierdurch lässt sich der Informationsgehalt der Messung erweitern, indem bei zwei oder mehreren Frequenzen die Impedanz der Spule bestimmt wird. Dadurch erhält man eindeutig bestimmte oder sogar überbestimmte Gleichungssysteme für mehrere Materialparameter, beispielsweise Leitfähigkeit und Permeabilität in Abhängigkeit von der Temperatur und vom Abstand.

In einer alternativen Ausführung könnte die Impedanz der Spule gemessen werden, indem sie zusammen mit einem Kondensator als freischwingender Oszillator betrieben wird. Zur Auswertung der Materialparameter kann dabei die Frequenz und die Amplitude der Schwingung herangezogen werden. Im Falle des LC-Oszillators könnte durch Umschalten der Kapazität die Grundfrequenz des Oszillators verändert werden. Dadurch kann der Informationsgehalt der Messung erhöht werden, was zur Unterdrückung zusätzlicher Störeinflüsse verwendet werden kann.

Die Eindringtiefe des elektromagnetischen Wechselfeldes im Messobjekt ist abhängig von der Frequenz und der Leitfähigkeit bzw. Permeabilität des Messobjekts.

Durch die Anpassung der Frequenz kann somit bei gegebener Leitfähigkeit und Permeabilität die Tiefe des Wirbelstromeffektes beeinflusst werden. Somit kann bei hohen Frequenzen die Temperatur nur in einer Oberflächenschicht bestimmt werden, während bei niedrigen Frequenzen die Temperatur über eine größere Tiefe als integraler Wert bestimmbar ist.

Eine Abstandsunabhängigkeit lässt sich wie folgt realisieren:

Da die Impedanz der Messspule auch vom Abstand zum Messobjekt abhängt, ist es notwendig, den Einfluss des Abstandes zu berücksichtigen. Anstelle eines hohen Aufwandes für eine abstandsstabile Halterung ist es einfacher und kostengünstiger, den Abstand zu messen und zu kompensieren. Dies kann ebenfalls aus den Messwerten der Impedanzmessung erfolgen nämlich durch

- Separate Erfassung von Real- und Imaginärteil bzw. Betrag und Phase;
- Messung von Real- und Imaginärteil bzw. Betrag und Phase bei verschiedenen Frequenzen zur Erhöhung des Informationsgehaltes;
- Freischwingender Oszillator; Messung von Frequenz und Amplitude; Umschaltung des Schwingkreiskondensators für weitere Resonanzfrequenzen.

Alternativ kann auch der Abstand über eine Mehrspulenanordnung (alternierend schaltbar) oder Differenzspulenanordnung in bekannter Weise kompensiert werden.

Eine Eigentemperaturunabhängigkeit lässt sich wie folgt erreichen:

Der Abstand zwischen Messobjekt und Sensor ist relativ gering, wodurch eine ausreichende Abschirmung der Wärmestrahlung des Messobjektes nicht möglich ist. Es kann daher eine Erwärmung des Sensors durch das Messobjekt sowohl durch Strahlungswärme als auch durch Konvektionswärme erfolgen. Die Erwärmung des Sensors bewirkt durch Veränderung der Spulenparameter einen Messfehler. So verändert eine Temperaturänderung durch die damit verbundene Widerstandsänderung des Spulendrahtes die Impedanz der Spule, wodurch die Temperaturmessung am Messobjekt beeinflusst wird. Weiterhin kann die Temperaturänderung aufgrund der thermischen Längenausdehnung der verwendeten Materialien den Messwert beeinflussen. Durch die Längenausdehnung könnte sich beispielsweise der Abstand des Sensors zum Messobjekt ändern. Weiterhin kann durch die Längenausdehnung des Sensors selbst die Messung beeinflusst werden. Besonders bei größeren Sensoren oder bei besonders hochauflösenden Messungen können Temperaturgradienten die Messung verfälschen, die aufgrund eines Temperaturgefälles zwischen der erwärmten Stirnseite des Sensors und der kühleren Rückseite (oder umgekehrt) auftreten.

Daher ist es - in erfindungsgemäßer Weise - für eine genaue, stabile und reproduzierbare Temperaturmessung erforderlich, die Eigentemperatur des Sensors zu erfassen und deren Einfluss auf die Temperaturmessung zu kompensieren.

Zur Kompensation der Eigentemperatur des Sensors bzw. Temperaturgradienten ist es notwendig, die Temperatur am Ort der Spule zu messen. Dazu gibt es folgende Möglichkeiten:

DC-Überlagerung zur Bestimmung des Gleichstromwiderstandes der Messspule. Dem Wechselstrom der Messspule kann ein Gleichstrom überlagert werden. Aus der Veränderung des Gleichanteils kann auf den ohmschen Widerstand der Spule geschlossen werden, wobei die Veränderung des Widerstandes ein Maß für die Temperaturänderung der Spule ist.

Temperaturfühler (NTC, PTC, PT100,...). Zur Temperaturmessung des Sensors kann ein separater Temperaturfühler im Sensor eingebettet werden, wodurch direkt die Temperatur im Bereich der Messspule erfasst werden kann.

Temperaturmesswicklung (örtlich verteilt zur T-Gradienten-Kompensation). Eine Temperaturmesswicklung, die örtlich verteilt um die Messspule angeordnet ist, ermöglicht zusätzlich die Erfassung des Temperaturgradienten über die Messspule hinweg. Um keine Beeinflussung der Temperaturmesswicklung durch das Messobjekt einerseits und keine Beeinflussung der Messwicklung des Sensors durch die Temperaturmesswicklung andererseits zu erhalten, ist eine bifilare Anordnung der Temperaturmesswicklung eine bevorzugte Ausführung. Besonders vorteilhaft ist diese Anordnung bei einem Aufbau des Sensors in einem keramischen Substrat.

Toroidale Wicklung (wechselspannungsbetrieben). Um den Einfluss des Messobjektes auf die Temperaturmessung zu eliminieren, ist eine um die Messspule toroidal angeordnete Wicklung sinnvoll. Die Parameter dieser Spule werden weitgehend nur durch die Temperatur der Messspule beeinflusst, da sich das Feld einer Toroidalspule lediglich im Inneren der Spule ausbildet. Hierbei ist vorteilhaft, dass in Verbindung mit der Messspule eine differentielle Anordnung (z.B. in Form einer wechselstromgespeisten Halbbrücke) aufzubauen ist. Hierbei bewirkt die Toroidalspule eine direkte Kompensation der Sensortemperatur.

Differenzspulenanordnung. Ebenso ist eine solche differentielle Spulenanordnung mit einer weiteren, im Aufbau der Messspule ähnlichen, Kompensationsspule möglich. Die Kompensationsspule wird dabei von einem Referenzmessobjekt definiert bedämpft und bleibt vom temperaturbehafteten Messobjekt unbeeinflusst. Durch einen festen Abstand des Referenzmessobjektes ist die Temperaturkompensation des Sensors zum Beispiel in einer Halbbrückenverschaltung möglich.

Der Sensor kann analog zu den bekannten Wirbelstrom-Abstandssensoren aufgebaut sein, indem eine gewickelte Spule in einem Gehäuse stirnseitig zum Messobjekt angeordnet ist. Die Spule ist über eine Sensorleitung mit der Elektronik verbunden. Die Elektronik speist die Spule mit Wechselstrom konstanter Frequenz. Die Impedanz der Spule wird in der Elektronik ausgewertet, indem beispielsweise mit einem Microcontroller oder Signalprozessor der Realteil und der Imaginärteil der Impedanz ausgewertet werden. Aus den beiden Messgrößen lassen sich dann beispielsweise der Abstand und die Temperatur bestimmen.

Für Hochtemperaturanwendungen kann der Sensor beispielsweise aus Keramik hergestellt sein, indem eine Spule in Keramik eingebettet ist. Besonders vorteilhaft ist die Ausführung der Spule in Mehrlagen- Keramiksubstraten (LTCC oder HTCC). Dadurch ist die Spule geschützt gegenüber Umwelteinflüssen eingebettet. Ein weiterer Vorteil der Keramik ist deren geringer thermischer Ausdehnungskoeffizient, so dass ein relativ stabiler Messwert möglich ist. Auch die zusätzliche Spule für die Temperaturkompensation kann sehr einfach und kostengünstig in der Keramik-Mehrlagentechnik eingebunden werden. Das Sensorelement könnte Teil des Gehäuses des Sensors sein, indem es beispielsweise durch Aktivlöten fest mit dem Metallgehäuse verbunden ist. Aber auch andere Verbindungstechnologien wie Kleben, Pressen, Weichlöten, etc. sind denkbar.

Der erfindungsgemäße Sensor kann wie folgt Anwendung finden:

Der erfindungsgemäße Sensor kann zum Beispiel für die Temperaturmessung von Bremsen eingesetzt werden. Bremsen erreichen beim Bremsvorgang extrem hohe Temperaturen im Bereich von einigen hundert bis tausend Grad Celsius. Die zu messenden Temperaturen erstrecken sich also über eine sehr großen Bereich. Die Belastung des Sensors durch den Temperatureintrag über Strahlung und/oder Konvektion ist somit sehr hoch. Daher ist der Sensor aufgebaut aus einer Spule, die in Mehrlagen-Keramik eingebettet ist und in einem Metallgehäuse sitzt. Der Sensor kann direkt die Temperatur der Bremsscheibe messen, indem er beispielsweise am Bremssattel angebracht ist. Der Abstand des Sensors zur Bremsscheibe kann sich aufgrund der hohen mechanischen Belastungen ändern. Diese Abstandsänderung wird durch die Auswerteelektronik erfasst und kompensiert. Da die Bremsscheibe beim Bremsvorgang sehr hohe Temperaturen erreicht (bis rotglühend), wird der Sensor durch die Strahlung stark erwärmt. Damit diese Erwärmung keinen Einfluss auf das Messergebnis hat, muss die Temperaturänderung des Sensors kompensiert werden. Dazu wird die Spule beispielsweise mit Gleichstrom beaufschlagt. Durch die Temperaturänderung der Spule ändert sich auch deren Gleichstromwiderstand. Diese Änderung kann ermittelt bzw. gemessen werden und damit die Temperaturänderung des Sensors kompensiert werden.

Anstatt direkt auf die Bremsscheibe zu messen, ist auch eine indirekte Messung beispielsweise am Bremssattel oder einer anderen geeigneten Stelle der Bremse denkbar. Es kann ein besonders geeignetes Material in thermischem Kontakt mit der Bremse oder deren Halterung angebracht sein, dessen Temperatur in erfindungsgemäßer Weise ermittelt wird.

Derartige Messungen können bei allen möglichen Bremsen, beispielsweise an Kraftfahrzeugen, Lastkraftwagen, oder an Schienenfahrzeugen oder Flugzeugen, durchgeführt werden. Mit der Temperaturmessung kann der Zustand der Bremse überwacht werden, um vorzeitigen Verschleiß zu vermeiden. Es können auch rechtzeitig Maßnahmen zur Kühlung eingeleitet werden, um eine Beschädigung der Bremse zu verhindern. Vorteilhaft ist auch, dass Stillstandszeiten vermieden werden, während der Bremsenzustand in erfindungsgemäßer Weise überwacht ist.

Weitere Anwendungsbeispiele können sein:

- Berührungslose Temperaturmessung im Walzwerk, wobei Bleche beim Walzen überwacht werden.
- Überwachung von Maschinen und Anlagen, insbesondere rotierende oder bewegte Maschinenteile, usw.

Beispielhaft sei das zur Erfindung gehörende Verfahren zur Bestimmung der Temperatur T eines Werkstücks beschrieben, wobei das Werkstück elektrisch leitend ist. Nach dem Verfahren wird ein elektromagnetisches Wechselfeld in unmittelbarer Nachbarschaft eines Werkstücks mit Hilfe einer Spule derart generiert, dass das Feld Wirbelströme an der Oberfläche des elektrisch leitenden Werkstücks erzeugt. Die Wirbelströme wirken auf das Feld zurück. Der Einfluss der Wirbelströme auf das Wechselfeld wird durch die Impedanzänderung der Spule gemessen.

Von ganz besonderer Bedeutung ist ein ganz besonderer Verfahrensschritt, wonach die Messung bei Einstellung der Frequenz des Wechselfelds auf einen festen Wert vorgenommen wird und wobei die Kopplungsimpedanz

$$\dot{Z} = Z_C \cdot e^{i\varphi_C}$$

der Spule bei dieser Frequenz ermittelt wird. Auf dieser Grundlage lässt sich die Temperatur "T" des Werkstücks bestimmen, und zwar gemäß der Gleichung:

$$T = \frac{1}{\alpha} \cdot \left( \frac{\sigma_0}{k \cdot \tan^2 \varphi} \cdot \omega \cdot r^2 - 1 \right) + T_0 \quad ,$$

wobei

$$k = \frac{9}{2 * \mu_0}$$

wobei

$\sigma$  = elektrische Leitfähigkeit des Werkstückes (1) bei 20°C
$\alpha$  = der Temperaturkoeffizient des elektrischen Widerstandes des Werkstückes,

wobei

$$\tan \varphi_C = \frac{X_C}{R_C} \quad ,$$

wobei

Xc  = Imaginärteil der Kopplungsimpedanz $Z_C$;
Rc  = Realteil der Kopplungsimpedanz $Z_C$;

$$r = \frac{1}{2}\left(d_1 - d_2\right),$$

wobei

r = Mittlerer Radius der Spule (2)
$d_1$ = Außendurchmesser der Spule (2)
$d_2$ = Innendurchmesser der Spule (2)
$\omega$ = die Kreisfrequenz des Wechselfeldes
$\varphi_C$ = der Phasenwinkel der Kopplungsimpedanz.

Das erfindungsgemäße Verfahren wird in vorteilhafter Weise dadurch weitergebildet, dass die Berechnung der Temperatur unter Verwendung eines mathematischen Modells erfolgt, welches eine zur Erzeugung des Wechselfeldes verwendeten Spule beschreibt und eines mathematischen Modells, welches den Aufbau des Werkstückes und dessen elektromagnetischen Eigenschaften in das zuletzt genannte mathematische Modell berücksichtigt.

Außerdem ist es denkbar, dass die elektrische Leitfähigkeit $\sigma$ des Werkstückes und der Abstand "h" zwischen der Spule und der Oberfläche des Werkstückes bei der genannten Berechnung der Temperatur des Werkstückes verwendet werden.

Die zur Erzeugung des elektromagnetischen Wechselfelds verwendete Spule kann auch gleichzeitig als Empfängerspule verwendet werden.

Zur Bestimmung der Temperatur eines Werkstückes, welches elektrisch leitend ist, lässt sich eine besondere Vorrichtung verwenden, zu der Glieder zur Erzeugung eines elektromagnetischen Wechselfeldes in unmittelbarer Nachbarschaft der Oberfläche des Werkstückes gehören. Das Feld erzeugt Wirbelströme in dem Werkstück, die auf das Feld zurückwirken. Außerdem sind Mittel zur Messung der Impedanzänderung der Spule vorgesehen, wobei die Vorrichtung eine besondere Anordnung enthält, die zur Ermittlung der Kopplungsimpedanz $Z_K$ der Spule und zur Berechnung auf Grundlage der Temperatur des Werkstückes dient.

Die Glieder zur Erzeugung des Wechselfelds umfassen eine Spule, die durch ein mathematisches Modell beschreibbar ist. Die Anordnung ist so beschaffen, dass sie das mathematische Modell bei ihrer Berechnung zu nutzen vermag.

Die Spule kann aus einer einzigen Lage von Windungen bestehen.

Die Anordnung ist vorzugsweise so beschaffen, dass diese die Temperatur "T" unter Verwendung des mathematischen Modells für die Spule und eines mathematischen Modells zu berechnen vermag. Dabei werden die elektrische Leitfähigkeit "$\sigma$" des Werkstücks und der Abstand "h" zwischen der Spule und dem Werkstück berücksichtigt.

Außerdem kann die Vorrichtung mindestens eine mit dem Abstand "h" zu dem Werkstück platzierte Spule umfassen. Auch können Glieder zur Messung der komplexen Impedanz bzw. des Real- und Imaginärteils der Spule bei einer bestimmten Frequenz "$\omega$" verwendet werden.

Das Verfahren zur Bestimmung der Temperatur "T" eines elektrisch leitenden Werkstücks kann des Weiteren folgende Schritte umfassen:

Zunächst einmal wird ein Wirbelstromsensor bereitgestellt, der eine elektrische Spule mit einem vorgewählten Durchmesser aufweist. Die Spule wird in einer ausgewählten Trenndistanz "h" von dem Werkstück positioniert. Es wird ein Wechselstrom mit einer ausgewählten Winkelfrequenz an die Spule angelegt.

Folgende weitere Schritte sind von Bedeutung:

- es wird die komplexe Impedanz $\dot{Z} = Z_0 \cdot e^{i\varphi_0}$ der Spule (2) ohne Einfluss des Werkstückes (1) gemessen;
- aus $Z_0$ werden Realteil $\operatorname{Re} Z_0$ Imaginärteil $\operatorname{Im} Z_0$ ermittelt;
- es wird die komplexe Impedanz $Z_s$ der Spule (2) bei einem Grundabstand $h_0$ zu dem Werkstück dessen elektrische Leitfähigkeit "$\sigma$" von $\sigma_{min}$ bis $\sigma_{max}$ variiert ist, gemessen;
- es werden die $\operatorname{Re} Z_s$ und $\operatorname{Im} Z_s$ ermittelt;
- es werden der Realteil $\operatorname{Re}_c$ und der Imaginärteil $\operatorname{Im}_c$ der Kopplungsimpedanz Zc berechnet, wobei

$$\operatorname{Re}_C = \operatorname{Re}\dot{Z}_S - \operatorname{Re}_C \dot{Z}_0 \qquad (1)$$

$$\text{Im}_C = \text{Im}\,\dot{Z}_S - \text{Im}_C\,\dot{Z}_0 \qquad\qquad (2)$$

- es wird der $\tan\varphi_C$ die Kopplungsimpedanz $Z_C$ berechnet, wobei

$$\tan\varphi_C = \frac{\text{Im}_C}{\text{Re}_C} \qquad\qquad (3)$$

- es wird die Temperatur "T" des Werkstückes (1) berechnet, wobei

$$T = \frac{1}{\alpha}\cdot\left(\frac{\sigma_0}{k\cdot\tan^2\varphi}\cdot\omega\cdot r^2 - 1\right) + T_0 \qquad\qquad (4)$$

wobei

$$k = \frac{9}{2*\mu_0}$$

Gemäß Gleichung 4 wird deutlich, dass es bei bekannten Werten $\alpha$, $\sigma_o$, $\omega$, r für die Temperaturbestimmung eines Werkstückes ausreicht, ausschließlich $\tan\varphi_C$ zu messen, wobei "T" im Wesentlichen unabhängig von dem Abstand "h" zwischen der Spule (2) und dem Werkstück (1) ist.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen

Fig. 1          in einem Blockschaltbild den grundsätzlichen Aufbau und die grundsätzliche Verschaltung eines erfindungsgemäßen Sensors zur Anwendung des erfindungsgemäßen Verfahrens,

Fig. 2a bis 2d      in prinzipieller Darstellung verschiedene Möglichkeiten zur Ermittlung der Eigentemperatur des Sensors,

Fig. 3a und 3b      in prinzipieller Darstellung mögliche Anwendungen erfindungsgemäßer Sensoren am Beispiel der Messung der Temperatur einer Bremsscheibe oder eines Bremsbelags einer Bremse und

Fig. 4          in schematischer Ansicht ein weiteres Ausführungsbeispiel einer Anwendung des erfindungsgemäßen Sensors am Beispiel der Messung der Temperatur von nicht ferromagnetischen Bändern, beispielsweise in einem Walzwerk während des Walzvorgangs.

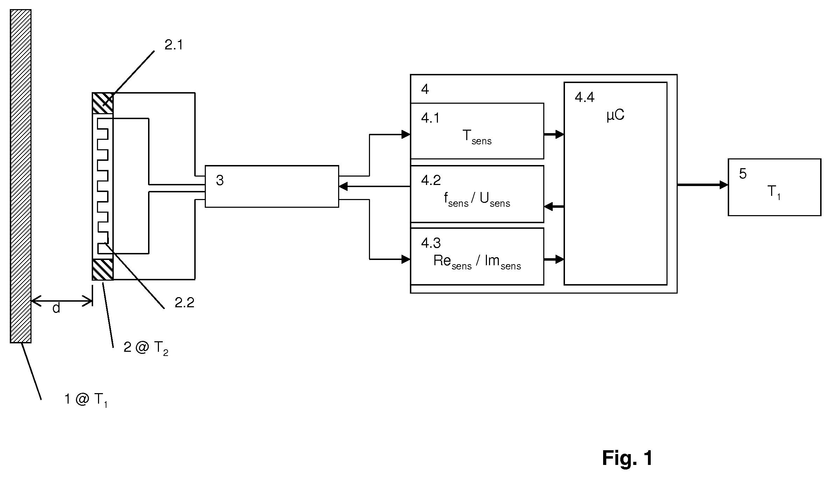

Gemäß Fig. 1 hat das Messobjekt 1 die Temperatur $T_1$, wohingegen das Messelement die Temperatur $T_2$ aufweist. Das Messelement 2 besteht aus der Messspule 2.1 und dem Kompensationselement 2.2. Über eine Zuleitung 3 wird das Messelement 2 mit der Auswerteeinheit 4 verbunden. Zur Ermittlung der Eigentemperatur des Sensors dient der Block 4.1. Der Ansteuerblock 4.2 erzeugt die erforderlichen Signale zur Ansteuerung des Sensors mit der Frequenz $f_{sens}$ und der Amplitude $U_{sens}$, wobei der Block vom Mikrocontroller gesteuert wird. Der Block 4.3 dient zur Ermittlung von Realteil $\text{Re}_{sens}$ und Imaginärteil $\text{Im}_{sens}$ der Messspule und leitet die Signale an den Mikrocontroller 4.4 weiter.

Der Mikrocontroller 4.4 errechnet mit Hilfe der Signale aus den Blöcken 4.1 und 4.3 die vom Abstand zum Messobjekt und von der Eigentemperatur $T_2$ des Sensors unabhängige Temperatur des Messobjektes und gibt diese an der Schnittstelle 5 aus.

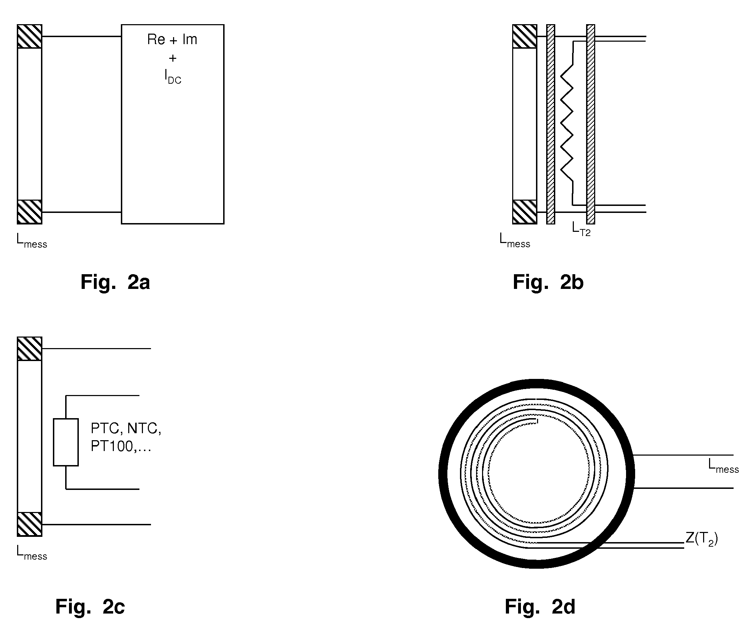

Die Figuren 2a bis 2d zeigen verschiedene Möglichkeiten, um die Eigentemperatur des Sensors ermitteln zu können.

Fig. 2a zeigt, dass neben der Speisung der Messspule mit Wechselstrom und der Ermittlung von Re und Im der Spule daraus, auch eine Überlagerung mit Gleichstrom $I_{DC}$ möglich ist. Aus dem Spannungsabfall über der Spule, der durch den Gleichstrom hervorgerufen wird, kann der ohmsche Widerstand der Spule bestimmt, und daraus auf die Temperatur des Sensors geschlossen werden.

Fig. 2b zeigt die Verwendung einer Kompensationsspule $L_{T2}$, wie es im Punkt "Differenzspulenanordnung" beschrieben ist. Die Eingezeichnete Abschirmung und das Referenztarget sind optional.

Fig. 2c stellt die Möglichkeit dar, im Bereich der Messspule ein Temperaturmesselement in Form eines temperaturabhängigen Widerstandes (PTC, NTC), eines Thermoelements (PT100, PT1000, o.ä.) oder eines integrierten Schaltkreises einzubetten.

Fig. 2d stellt die Möglichkeit einer bifilar gewickelten Spule dar, wobei die Darstellung lediglich schematisch ist. Bei einer gewickelten Ausführung des Sensors kann diese Wicklung im Durchmesser kleiner oder größer als die Messwicklung sein, oder aber auch innerhalb und außerhalb angebracht werden. Bei einer bevorzugten Ausgestaltung des Sensorelements in keramischem Substrat kann diese Wicklung auch räumlich um die Messwicklung verteilt sein, um mögliche Temperaturgradienten erfassen zu können.

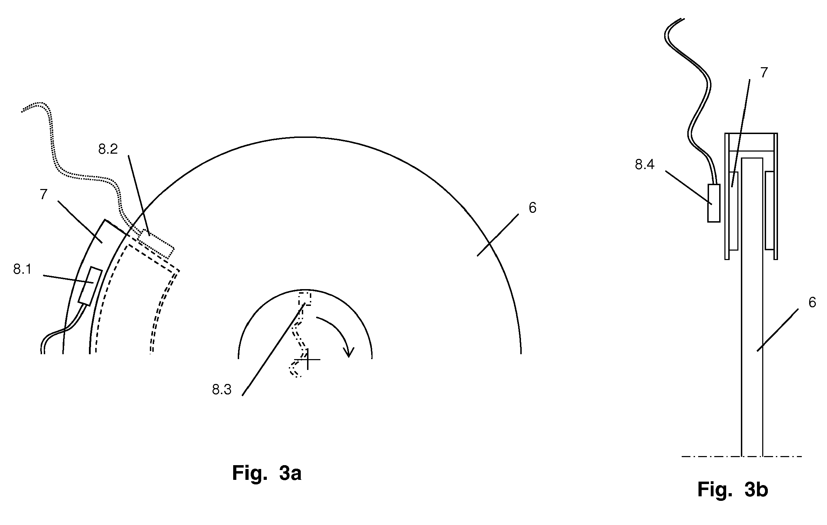

Figuren 3a und 3b zeigen ein mögliches Ausführungsbeispiel. Dargestellt ist die Messung der Temperatur einer Bremsscheibe bzw. des Bremsbelages einer Bremse. Die rotierende Bremsscheibe 6 ist nur teilweise dargestellt, ebenso der Bremssattel 7 mit den Bremsbelägen. Zur Messung der Temperatur der Bremsscheibe kommen verschiedene Einbaupositionen des Sensors 8 in Frage, in der Fig. 3a mit Bezugszeichen 8.1 bis 8.3 bezeichnet.

8.1 bezieht sich auf eine Messung der Temperatur an der Stirnseite der Bremsscheibe, wobei die Lage des Sensors im Bereich des Bremssattels nur beispielhaft ist.

8.2 zeigt eine Messung der Temperatur der Bremsscheibe auf der Reibfläche der Scheibe, wobei die Befestigung des Sensorelements am Bremsbelag vorgesehen ist, jedoch auch an einer separaten Halterung erfolgen kann. Es wird hier deutlich, dass die Abstandsunabhängigkeit hier wichtig ist, da durch den Verschleiß der Bremsscheibe sich der Abstand zwischen Sensor und Scheibe verändert, ebenso wie durch den Schlag der Bremsscheibe.

8.3 stellt den Einbau im Bereich der Achse der Bremsscheibe dar, wobei die Messung ebenfalls gegen die schmale Innenfläche der Scheibe erfolgt. Hier ist ein geschützter Einbau des Sensors möglich.

Die in Fig. 3b gezeigte Einbaulage 8.4 des Sensors stellt eine Messung der Temperatur des Bremsbelages 7, bzw. dessen Rückseite dar. Ist das Material des Belages als Messobjekt nicht geeignet, so kann ein speziell gewähltes Target in thermisch guter Kopplung am Belag angebracht werden, Um ein möglichst schnelles Ansprechverhalten zu erreichen, kann die thermische Masse dieses Messobjekts möglichst gering gehalten werden. Eine geeignete Beschichtung des Belages wäre in diesem Zusammenhang möglich. Durch das berührungslose Messverfahren kann hier der Verschleiß des Belages den Sensor nicht beschädigen, wohingegen dies bei einem in den Belag eingebetteten Temperaturfühler wahrscheinlich ist.

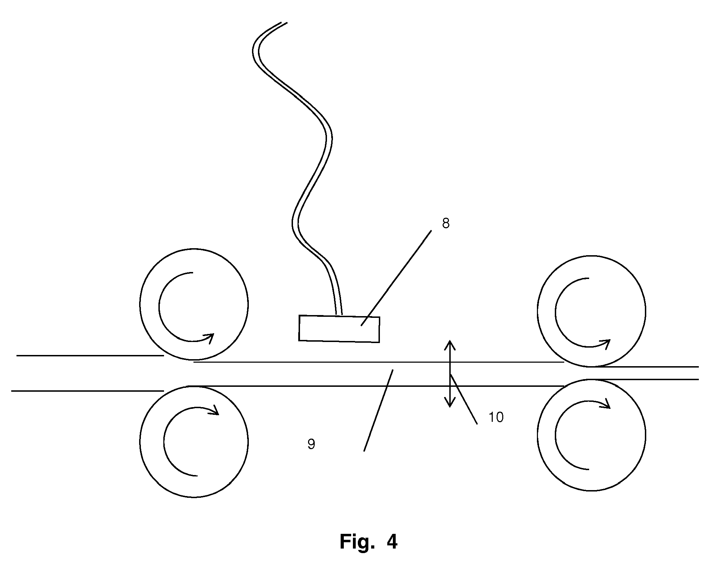

In Figur 4 ist die Messung der Temperatur von nicht ferromagnetischen Bändern (z.B. Aluminium) in einem Walzwerk während des Walzvorgangs als ein weiteres Anwendungsbeispiel für den erfindungsgemäßen Sensor dargestellt. Da im Bereich der Walzen der Verschmutzungsgrad sehr hoch ist, sind optische Verfahren störanfällig. Ebenso ist durch die hohen Umgebungstemperaturen im Bereich des Bleches 9 eine Kühlung der optischen Sensoren notwendig. Durch den robusten Aufbau, v.a. aber durch die bevorzugte Ausführung in keramischem Substrat, kann der vorgeschlagene Sensor 8 unbeeinflusst von der verschmutzten Umgebung und der hohen Temperatur die Temperatur des Bleches 9 erfassen. Durch die abstandsunabhängige Messung kann auch die Schwingung des Bleches 10 beim Walzvorgang die Temperaturmessung nicht beeinflussen.

Hinsichtlich weiterer vorteilhafter Ausgestaltungen des erfindungsgemäßen Sensors nebst System und erfindungsgemäßem Verfahren wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

## Patentansprüche

1. Berührungslos arbeitender Wirbelstromsensor zur Temperaturmessung an einem elektrisch leitfähigen Messobjekt (1) bzw. Bauteil, wobei die Messung im Einflussbereich von Messobjekt/Bauteil (1) und Sensor unabhängig vom Abstand (d) zwischen dem Sensor und dem Messobjekt/Bauteil (1) ist, wobei die Eigentemperatur des Sensors, vorzugsweise am Ort der Messspule (2.1) ermittelt wird, **dadurch gekennzeichnet, dass** der Einfluss der Eigentemperatur des Sensors bzw. eines Temperaturgradienten am Sensor auf das Ergebnis der Temperaturmessung am Messobject (1) bzw. Bauteil kompensiert wird.

2. Sensor nach Anspruch 1, **gekennzeichnet durch** eine DC-Überlagerung zur Bestimmung des Gleichstromwiderstandes der Messspule, wobei dem Wechselstrom der Messspule ein Gleichstrom überlagert wird und aus der Veränderung des Gleichanteils auf den ohmschen Widerstand der Messspule geschlossen wird und wobei die Veränderung des Widerstandes ein Maß für die Temperaturänderung der Messspule ist.

3. Sensor nach Anspruch 1, **gekennzeichnet durch** einen zur unmittelbaren Temperaturmessung im Sensor dienenden Temperaturfühler, der vorzugsweise in den Sensor integriert bzw. im Sensor eingebettet ist, wodurch die Temperatur im unmittelbaren Bereich der Messspule erfassbar ist.

4. Sensor nach Anspruch 1, **gekennzeichnet durch** eine Temperaturmesswicklung zur Kompensation eines Temperaturgradienten über die Messspule hinweg, wobei die Temperaturmesswicklung örtlich verteilt um die Messspule angeordnet ist.

5. Sensor nach Anspruch 1, **gekennzeichnet durch** eine bifilare Anordnung der Temperaturmesswicklung, insbesondere bei einem Aufbau des Sensors in einem keramischen Substrat.

6. Sensor nach Anspruch 1, **gekennzeichnet durch** eine um die Messspule herum angeordnete, wechselspannungsbetriebene toroidale Wicklung bzw. Spule, wobei sich das Feld der Toroidalspule lediglich im Inneren der Spule ausbildet, wobei eine differentielle Anordnung der Messspule, beispielsweise in Form einer wechselstromgespeisten Halbbrücke, vorgesehen sein kann und wobei die Toroidalspule eine direkte Kompensation der Sensortemperatur ermöglichen kann.

7. Sensor nach Anspruch 1, **gekennzeichnet durch** eine Differenzspulenanordnung der Messspule mit einer weiteren, im Aufbau der Messspule ähnlichen Kompensationsspule, wobei die Kompensationsspule von einem Referenzmessobjekt definiert bedämpft wird und vom temperaturbehafteten Messobjekt unbeeinflusst bleibt.

8. Sensor nach Anspruch 7, **gekennzeichnet durch** einen festen Abstand des Referenzmessobjekts von der Messspule, wobei die Temperaturkompensation des Sensors beispielsweise in einer Halbbrückenverschaltung möglich ist.

9. Sensor nach einem der Ansprüche 1 bis 8, **gekennzeichnet durch** den grundsätzlichen Aufbau eines für sich gesehen bekannten Wirbelstrom-Abstandssensors, wobei eine Spule in einem Gehäuse stirnseitig zum Messobjekt angeordnet ist, die Spule über eine Sensorleitung mit der Elektronik des Sensors verbunden ist, die Elektronik die Spule mit Wechselstrom konstanter Frequenz speist, die Impedanz der Spule in der Elektronik **dadurch** ausgewertet wird, indem vorzugsweise mit einem Microcontroller oder Signalprozessor der Realteil und der Imaginärteil der Impedanz ausgewertet werden, und wobei aus den beiden Messgrößen der Abstand und/oder die Temperatur bestimmt wird/werden.

10. Sensor nach einem der Ansprüche 1 bis 9, **gekennzeichnet durch** eine Einbettung der Messspule und ggf. der zur Temperaturkompensation dienenden zusätzlichen Spule in Keramik, vorzugsweise in Mehrlagen- Keramiksubstraten.

11. Sensor nach Anspruch 10, **dadurch gekennzeichnet, dass** die Messspule und ggf. die zusätzliche Spule in Keramik versintert ist.

12. Sensor nach einem der Ansprüche 1 bis 11, **gekennzeichnet durch** eine Ausführung in LTCC (low temperature cofired ceramics) oder in HTCC (high temperature cofired ceramics).

13. Sensor nach einem der Ansprüche 1 bis 12, **gekennzeichnet durch** ein Sensorelement als Teil bzw. Bestandteil des Gehäuses.

14. Verfahren zur Temperaturmessung an einem Messobjekt (1) bzw. Bauteil mittels eines berührungslos arbeitenden Wirbelstromsensors, wobei die Messung im Einflussbereich von Messobjekt/Bauteil (1) und Sensor unabhängig vom Abstand (d) zwischen dem Sensor und dem Messobjekt/Bauteil (1) durchgeführt wird, mit einem Sensor nach einem der Ansprüche 1 bis 13, **dadurch gekennzeichnet, dass** die Eigentemperatur des Sensors gemessen und deren Einfluss auf das Ergebnis der Temperaturmessung kompensiert wird.

**Claims**

1. Contactlessly operating eddy current sensor for temperature measurement on an electrically conductive measurement object (1) or component, wherein the measurement in the influence region of the measurement object/component (1) and sensor is independent of the spacing (d) between the sensor and the measurement object/component (1), wherein the inherent temperature of the sensor is preferably established at the location of the measurement coil (2.1),
**characterised in that** the influence of the inherent temperature of the sensor or a temperature gradient at the sensor on the result of the temperature measurement on the measurement object (1) or component is compensated for.

2. Sensor according to claim 1, **characterised by** a DC superimposition in order to determine the direct current resistance of the measurement coil, wherein a direct current is superimposed on the alternating current of the measurement coil and, from the change of the direct proportion, a conclusion is drawn relating to the ohmic resistance of the measurement coil and wherein the change of the resistance is a measurement for the temperature change of the measurement coil.

3. Sensor according to claim 1, **characterised by** a temperature sensor which is used for direct temperature measurement in the sensor and which is preferably integrated or embedded in the sensor, whereby the temperature can be detected in the direct vicinity of the measurement coil.

4. Sensor according to claim 1, **characterised by** a temperature measurement winding for compensating for a temperature gradient over the measurement coil, wherein the temperature measurement winding is arranged so as to be locally distributed around the measurement coil.

5. Sensor according to claim 1, **characterised by** a bifilar arrangement of the temperature measurement winding, in particular when the sensor is constructed in a ceramic substrate.

6. Sensor according to claim 1, **characterised by** a toroidal winding or coil which is arranged around the measurement coil and which is operated by alternating current, wherein the field of the toroidal coil is formed only inside the coil, wherein a differential arrangement of the measurement coil, for example, in the form of a half-bridge which is supplied with alternating current, may be provided and wherein the toroidal coil can enable a direct compensation for the sensor temperature.

7. Sensor according to claim 1, **characterised by** a differential coil arrangement of the measurement coil with an additional compensation coil which is similar in terms of the structure of the measurement coil, wherein the compensation coil is damped in a defined manner by a reference measurement object and remains uninfluenced by the measurement object which is affected by temperature.

8. Sensor according to claim 7, **characterised by** a fixed spacing of the reference measurement object from the measurement coil, wherein the temperature compensation of the sensor is possible, for example, in a half-bridge circuit.

9. Sensor according to any one of claims 1 to 8, **characterised by** the basic structure of an eddy current spacing sensor which is known per se, wherein a coil is arranged in a housing at the end face with respect to the measurement object, the coil is connected to the electronic system of the sensor via a sensor line, the electronic system supplies the coil with alternating current at a constant frequency, the impedance of the coil is evaluated in the electronic system, preferably by the real portion and the notional portion of the impedance being evaluated with a microcontroller or signal processor, and wherein the spacing and/or the temperature is/are determined from the two measurement variables.

10. Sensor according to any one of claims 1 to 9, **characterised by** embedding the measurement coil and optionally the additional coil which is used for temperature compensation in ceramic material, preferably in multi-layer ceramic substrates.

11. Sensor according to claim 10, **characterised in that** the measurement coil and where applicable the additional coil is/are sintered in ceramic material.

12. Sensor according to any one of claims 1 to 11, **characterised by** a construction in LTTC (low temperature cofired ceramics) or in HTCC (high temperature cofired ceramics).

13. Sensor according to any one of claims 1 to 12, **characterised by** a sensor element as a portion or component of the housing.

14. Method for temperature measurement on a measurement object (1) or component by means of a contactlessly operating eddy current sensor, wherein the measurement in the influence region of the measurement object/component (1) and sensor is carried out independently of the spacing (d) between the sensor and the measurement object/component (1), having a sensor in accordance with any one of claims 1 to 13, **characterised in that** the inherent temperature of the sensor is measured and the influence thereof on the result of the temperature measurement is compensated for.

**Revendications**

1. Capteur de courants de Foucault sans contact pour la mesure de température sur un objet de mesure ou composant électro-conducteur (1), la mesure étant déterminée dans la zone d'influence de l'objet de mesure/ du composant (1) et du capteur indépendamment de la distance (d) entre le capteur et l'objet de mesure/ le composant (1), la température propre du capteur, de préférence au niveau de la bobine de mesure (2.1), **caractérisé en ce que** l'influence de la température propre du capteur ou d'un gradient de température au niveau du capteur sur le résultat de la mesure de température au niveau de l'objet de mesure (1) ou du composant est compensée.

2. Capteur selon la revendication 1, **caractérisé par** une superposition DC pour la détermination de la résistance à courant continu de la bobine de mesure, un courant continu étant superposé au courant alternatif de la bobine de mesure et la variation de la part continue permettant de déduire la résistance ohmique de la bobine de mesure et la variation de la résistance étant une mesure de la variation de température de la bobine de mesure.

3. Capteur selon la revendication 1, **caractérisé par** une sonde de température permettant une mesure de température directe dans le capteur, qui est de préférence intégrée ou incorporée dans le capteur, ce qui permet de mesurer la température à proximité immédiate de la bobine de mesure.

4. Capteur selon la revendication 1, **caractérisé par** une spire de mesure de température pour la compensation d'un gradient de température sur la bobine de mesure, la spire de mesure de température étant disposée de manière répartie localement autour de la bobine de mesure.

5. Capteur selon la revendication 1, **caractérisé par** une disposition bifilaire de la spire de température, plus particulièrement lors d'une construction du capteur dans un substrat céramique.

6. Capteur selon la revendication 1, **caractérisé par** une spire ou une bobine toroïdale, utilisée avec une tension alternative, disposée autour de la bobine de mesure, le champ de la bobine toroïdale se formant uniquement à l'intérieur de la bobine, une conception différentielle de la bobine de mesure, par exemple sous la forme d'un demi-pont alimenté par un courant alternatif, pouvant être prévue et la bobine toroïdale pouvant permettre une compensation directe de la température du capteur.

7. Capteur selon la revendication 1, **caractérisé par** une conception différentielle de la bobine de mesure avec une autre bobine de compensation, de conception similaire à la bobine de mesure, la bobine de compensation étant amortie de manière définie par un objet de mesure de référence et restant non influencée par l'objet de mesure avec la température.

8. Capteur selon la revendication 7, **caractérisé par** une distance fixe entre l'objet de mesure de référence et la bobine de mesure, la compensation de température du capteur étant possible dans un circuit en demi-pont.

9. Capteur selon l'une des revendications 1 à 8, **caractérisé par** la construction de base d'un capteur de distance à courants de Foucault connu en soi, une bobine étant disposée dans un boîtier du côté frontal par rapport à l'objet de mesure, la bobine étant reliée à l'électronique du capteur par l'intermédiaire d'une ligne de capteur, l'électronique alimentant la bobine avec un courant alternatif de fréquence constante, l'impédance de la bobine dans l'électronique étant analysée en analysant ,de préférence avec un micro-contrôleur ou un processeur de signaux, la partie réelle et la partie imaginaire de l'impédance et les deux grandeurs de mesure permettant de déterminer la distance et/ou la température.

**10.** Capteur selon l'une des revendications 1 à 9, **caractérisé par** une intégration de la bobine de mesure et, le cas échéant, de la bobine supplémentaire en céramique servant à la compensation de la température, de préférence dans des substrats céramiques multicouches.

**11.** Capteur selon la revendication 10, **caractérisé en ce que** la bobine de mesure et, le cas échéant, la bobine supplémentaire, sont frittées en céramique.

**12.** Capteur selon l'une des revendications 1 à 11, **caractérisé par** une réalisation en LTCC (low temperature cofired ceramics) ou en HTCC (high temperature cofired ceramics).

**13.** Capteur selon l'une des revendications 1 à 12, **caractérisé par** un élément de capteur en tant que partie du boîtier.

**14.** Procédé de mesure de température au niveau d'un objet de mesure (1) ou d'un composant au moyen d'un capteur de courants de Foucault sans contact, la mesure dans la zone d'influence de l'objet de mesure / du composant (1) et du capteur étant effectuée indépendamment de la distance (d) entre le capteur et l'objet de mesure / le composant (1), avec un capteur selon l'une des revendications 1 à 13, **caractérisé en ce que** la température propre du capteur est mesurée et son influence sur le résultat de la mesure de température est compensée.

**Fig. 1**

Re + Im
+
$I_{DC}$

$L_{mess}$

**Fig. 2a**

$L_{T2}$

$L_{mess}$

**Fig. 2b**

PTC, NTC,
PT100,...

$L_{mess}$

**Fig. 2c**

$L_{mess}$

$Z(T_2)$

**Fig. 2d**

Fig. 3b

Fig. 3a

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2410067 A1
- DE 2711797 A1

- EP 0423084 B1